# EUROPEAN PATENT APPLICATION

(11) **EP 3 018 857 A1**
(43) Date of publication of application: **11.05.2016**
(21) Application number: 14382442.3
(22) Date of filing: 06.11.2014
(51) Int. Cl.: H04L 5/00

(54) **Mitigation of interferences caused by carrier aggregation**

(71) Applicant: Vodafone IP Licensing Limited, The Connection Newbury Berkshire RG14 2FN (GB)
(72) Inventor: Anaya Chamorro, Luis Manuel, E-28042 Madrid (ES)
(74) Representative: Boult Wade Tennant

(57) **Abstract**

The present disclosure relates to mitigation of interference caused by uplink carrier aggregation at a terminal. In particular, mitigation of interference may be achieved by initiating a first mitigation procedure, wherein the first mitigation procedure is controlled by a network controller, and, if there is a failure in the first mitigation procedure, initiating a second mitigation procedure, wherein the second mitigation procedure is controlled by the terminal.

## Description

### Technical Field

The present disclosure relates to a method, terminal, network controller and system for mitigating interference caused by uplink carrier aggregation at a terminal.

### Background

Carrier Aggregation (CA) functionality enables terminals (such as user equipment, UE) to operate multiple carriers simultaneously. For CA, there may be a single entity or scheduler that is located, for example, in a baseband unit (BBU) of a Base Station that can handle multiple carriers being aggregated.

There are two types of CA: uplink (UL) and downlink (DL).

UL CA can suffer from the following problems:
- Power is limited in UL due to battery consumption and capacity at the terminal side, thus reducing the coverage at which UL CA can be performed.
- Intermodulation products (IMD) and/or harmonics created due to the simultaneous transmissions in UL can create interference in other portions of the spectrum where reception may need to be secured. These portions of the spectrum might be Long-Term Evolution (LTE) receiver (Rx) bands, or the receiver bands of other technologies, for example Global Navigation Satellite System (GNSS) Rx bands.

The protection of GNSS systems may be particularly sensitive because it is a non 3^{rd} Generation Partnership Project (3GPP) technology. Also, GNSS may be covered by strict regulations that require a certain GNSS reception and/or location accuracy to be met. Therefore, mitigation of interference to GNSS caused by harmonics and/or IMD created by UL CA is desirable.

A number of solutions have been proposed to address the problem of GNSS protection. These proposals include:
a) P-Maximum Power Reduction (MPR), i.e. UL transmit power controlled by the terminal - R4-145129, incorporated herein by reference.
b) Signalling with Resource Band (RB) restrictions - R4-145947, incorporated herein by reference.
c) A-MPR, i.e. UL transmit power controlled by the network - R4-145563, incorporated herein by reference.
d) MPR with signalling - R4-145947, incorporated herein by reference.
e) Autonomous action by the terminal to protect GNSS - R4-145129, incorporated herein by reference.
f) Nothing

Some of these solutions are controlled by the network and others are controlled by the terminal. The behaviour of the terminal may therefore by unpredictable to the side that does not have control and may result in sub-optimal mitigation of interference to GNSS caused by harmonics and/or IMD created by UL CA.

### Summary

The present disclosure provides a method for mitigating interference caused by uplink carrier aggregation at a terminal (for example, a UE or M2M device), the method comprising the steps of: initiating a first mitigation procedure, wherein the first mitigation procedure is controlled by a network controller; and if there is a failure in the first mitigation procedure, initiating a second mitigation procedure, wherein the second mitigation procedure is controlled by the terminal.

The interference to be mitigated may be interference in portions of the spectrum where reception may need to be secured (for example, in portions of the spectrum reserved for the receipt of Global Navigation Satellite System (GNSS) signals, or portions of the spectrum reserved for Long-Term Evolution (LTE) receiver (Rx) bands). The interference caused by uplink (UL) carrier aggregation (CA) may take the form of intermodulation products (IMD) and/or harmonics being generated in those other portions of the spectrum where reception may need to be secured.

By dividing responsibility for the mitigation of interference caused by UL CA between the network and terminal, a more balanced and predictable approach to interference mitigation is achieved. In particular, it enables the network to attempt centralised control of interference mitigation, which might have the best chance of effectively mitigating the interference whilst still enabling UL CA to take place effectively. If the network controlled mitigation procedure should fail, the terminal may then be able to address the interference problem using terminal controlled mitigation procedures, thereby preventing interference persisting indefinitely (as might be the case if control of mitigation procedures is retained exclusively by the network). As a result, mitigation of interference may be more predictable for all parties involved and optimised mitigation of interference may be achieved.

Preferably, the first mitigation procedure comprises at least one of: procedure (a): rescheduling a resource block (RB) allocation for the terminal; procedure (b): changing at least one of the carrier bands used for carrier aggregation; and procedure (c): reducing a maximum output power of the terminal.

The network may reschedule the RB allocation and/or change at least one of the carrier bands used for carrier aggregation (for example, by changing the frequency of at least one of the carrier bands) for the terminal in such a way that UL CA interference will no longer be an issue (for example, by moving the IMD and/or harmonics away from the relevant frequency bands). The network controller may carry out rescheduling of RB allocation and/or change at least one of the carrier bands used for carrier aggregation by signalling the rescheduled RB allocation and/or new frequency for at least one of the carrier based to the terminal so that the terminal may apply it.

The network may reduce the maximum output power of the terminal by instructing the terminal to reduce its maximum output power by a particular amount. This may mitigate the interference, for example, by reducing the amplitude of the IMD and/or harmonics such that the relevant frequency bands do not experience the same degree of interference as before.

Optionally, there is a failure in the first mitigation procedure if either procedure (a) or procedure (b) fails.

Optionally, the first mitigation procedure fails if both procedure (a) and procedure (b) fail.

Where the first mitigation procedure fails if both procedure (a) and procedure (b) fail, preferably, initiating the first mitigation procedure comprises initiating procedure (a) and, if procedure (a) fails, initiating procedure (b); or initiating procedure (b) and, if procedure (b) fails, initiating procedure (a).

Preferably, procedure (a) fails if the network controller has not rescheduled the resource block (RB) allocation for the terminal within a first time period (t₁). The network controller may not reschedule the RB allocation for the terminal within the first time period t₁ if the network controller is unable to carry out RB rescheduling, or if it takes too long to determine how the RB should be rescheduled in order to mitigate interference.

Preferably, procedure (b) fails if the network controller has not yet instructed the terminal to apply the maximum output power reduction within a second time period (t₂). The network controller may not be able to instruct the terminal to apply the maximum output power reduction within a second time period (t₂) if the network controller is unable to carry out maximum power reduction, or if it takes too long to carry out maximum power reduction, or if the terminal has requested an amount of maximum power reduction that is not less than a threshold limit (MPR_{LIMIT}) and cannot therefore instruct the terminal to carry out maximum power reduction.

By utilising the first timer t₁ and/or second timer t₂, it may be ensured that the network makes timely decisions and does not leave the terminal waiting for network controlled interference mitigation for extended periods of time. Thus, mitigation of interference may be dealt with by the terminal if the network is unable to deal with it in a timely manner.

Optionally, procedure (b) fails if a requested reduction of maximum output power of the terminal exceeds a threshold power reduction amount (MPR_{LIMIT}). The terminal may signal to the network a request for a reduction in maximum power output (MPR) by a particular amount. By utilising a threshold power reduction amount, the range of power reduction allowable can be controlled by the network such that UL CA can continue to take place effectively at the terminal even after its maximum output power has been reduced.

Optionally, the first mitigation procedure comprises the terminal indicating to the network that interference caused by carrier aggregation is, or may be, taking place at a terminal. The terminal may be able to determine that there is carrier aggregation taking place at the terminal, or it may be able to determine that there is the possibility of interference taking place at the terminal. In either case, it can signal to the network that interference caused by carrier aggregation is or may be taking place, such that a network controlled procedure may be attempted in order to mitigate the interference.

Optionally, the second mitigation procedure comprises at least one of: procedure (d): reducing a maximum output power of the terminal; procedure (e): de-activating transmission on at least one of the carrier bands used for carrier aggregation; . By carrying out procedure (e), the terminal 110 would effectively turn off UL CA. Thus, if the first mitigation procedure fails, the terminal can still mitigate the interference caused by UL CA, potentially by turning off UL CA.

The terminal may comprise a Global Navigation Satellite System (GNSS) receiver, and the interference caused by uplink carrier aggregation at the terminal comprises interference to the received Global Navigation Satellite System (GNSS) signal.

The present disclosure also provides a terminal (for example, a UE or M2M device) for mitigating interference caused by uplink carrier aggregation at the terminal, the terminal being configured to: initiate a first mitigation procedure, wherein the first mitigation procedure is controlled by a network controller; and if there is a failure in the first mitigation procedure, initiate a second mitigation procedure, wherein the second mitigation procedure is controlled by the terminal.

As explained above in respect of the corresponding method, by dividing responsibility for the mitigation of interference caused by UL CA between the network and terminal, a more balanced and predictable approach to interference mitigation is achieved. In particular, it enables the network to attempt centralised control of interference mitigation, which might have the best chance of effectively mitigating the interference whilst still enabling UL CA to take place effectively. If the network controlled mitigation procedure should fail, the terminal may then be able to address the interference problem using terminal controlled mitigation procedures, thereby preventing interference persisting indefinitely (as might be the case if control of mitigation procedures is retained exclusively by the network). As a result, mitigation of interference may be more predictable for all parties involved and optimised mitigation of interference may be achieved.

The present disclosure also provides a network controller for mitigating interference caused by uplink (UL) carrier aggregation (CA) at a terminal (for example, a UE or M2M device), the network controller being configured to: initiate a first mitigation procedure, wherein the first mitigation procedure is controlled by the network controller; and if there is a failure in the first mitigation procedure, initiate a second mitigation procedure, wherein the second mitigation procedure is controlled by the terminal.

As explained above in respect of the corresponding method, by dividing responsibility for the mitigation of interference caused by UL CA between the network and terminal, a more balanced and predictable approach to interference mitigation is achieved. In particular, it enables the network to attempt centralised control of interference mitigation, which might have the best chance of effectively mitigating the interference whilst still enabling UL CA to take place effectively. If the network controlled mitigation procedure should fail, the terminal may then be able to address the interference problem using terminal controlled mitigation procedures, thereby preventing interference persisting indefinitely (as might be the case if control of mitigation procedures is retained exclusively by the network). As a result, mitigation of interference may be more predictable for all parties involved and optimised mitigation of interference may be achieved.

Also disclosed is a method for mitigating interference at a terminal, the method comprising the steps of: initiating a first mitigation procedure, wherein the first mitigation procedure is controlled by a network controller; and if there is a failure in the first mitigation procedure, initiating a second mitigation procedure, wherein the second mitigation procedure is controlled by the terminal. The interference may be uplink carrier aggregation interference (for example, IMD and/or harmonic interference), or downlink carrier aggregation interference (for example, harmonic interference), or uplink single carrier interference (for example, harmonic interference), or downlink single carrier interference (for example, harmonic interference).

The above disclosed preferable and optional method features may also be utilised in this method for mitigating interference at a terminal.

Also disclosed is a network controller configured to perform the method for mitigating interference at the terminal.

Also disclosed is a terminal configured to perform the method for mitigating interference at the terminal.

The present disclosure also provides a system comprising at least either of the above disclosed terminals and either of the above disclosed network controllers.

### Brief description of the drawings

The present disclosure is described, by way of example only, with reference to the following drawings in which:
Figure 1 shows a highly schematic system comprising a base station and a terminal;
Figure 2 shows an example of IMD interference in the GNSS band of the terminal 110 of Figure 1; and
Figure 3 shows an example method by which the IMD interference in the GNSS band of Figure 2 may be mitigated.

### Detailed description

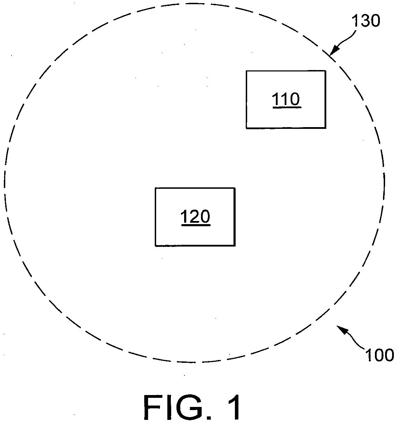

Figure 1 shows a highly schematic diagram of a part of a telecommunications system 100. The telecommunication system 100 comprises a terminal 110 and a base station 120. The base station 120 has an associated cell 130, within which the terminal 110 is located. The terminal 110 may be any form of device that is capable of performing uplink (UL) carrier aggregation (CA). For example, it may be a user equipment device (UE), such as a mobile telephone, a smartphone, a tablet computer, etc, or a machine-to-machine (M2M) device etc.

An M2M device may be any device wherein at least part of the device communications operations are autonomous (i.e., do not require user or operator interaction). For example, an M2M device may be a smart meter that provides utility meter readings autonomously to utility providers using UL CA, or a vehicle control module that autonomously provides sensor readings to a vehicle servicing company using UL CA etc.

The terminal 110 may be capable of receiving signals as part of a Global Navigation Satellite System (GNSS), for example the Global Positioning System (GPS), or GLONASS, or Galileo, or Beidu, etc. For this purpose, the terminal 110 may comprise a GNSS receiver configured to receive a GNSS signal.

The base station 120 may be any form of base station that can handle multiple carriers being aggregated, for example a base transceiver station (BTS), a Node B, an eNode B etc. The base station 120 may comprise a network entity or scheduler in a baseband unit (BBU), or in any other part of the base station 120, that may handle the multiple carriers being aggregated by the terminal 110 during UL CA. Alternatively, the scheduler may not form part of the base station 120, but may instead be located separately from the base station 120 (either at the same location, or a different location, to the base station 120) and interface with the base station 120.

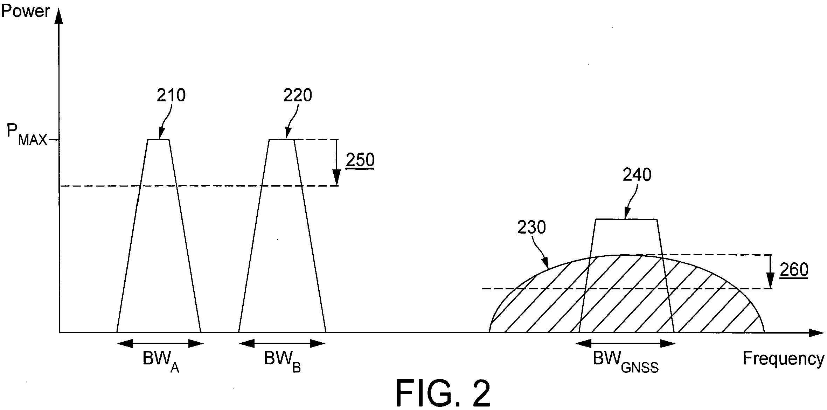

Figure 2 shows an example of intermodulation products (IMD) interference in the GNSS band of the terminal 110. A first uplink (UL) band A 210 has a bandwidth BW_{A} and a second uplink (UL) band B 220 has a bandwidth BW_{B}. Carrier aggregation is performed using UL band A 210 and UL band B 220, which generates the resulting IMD 230. The IMD 230 overlie and interferes with a GNSS band 240, which has a bandwidth BW_{GNSS}. The GNSS band 240 is the spectrum band for receiving a GNSS signal at the terminal 110. It will be appreciated that harmonic interference in the GNSS band 240 may be created by UL CA in addition, or as an alternative to, IMD interference. Therefore, interference in the GNSS band 240 shall from hereon be referred to as harmonic and/or IMD interference.

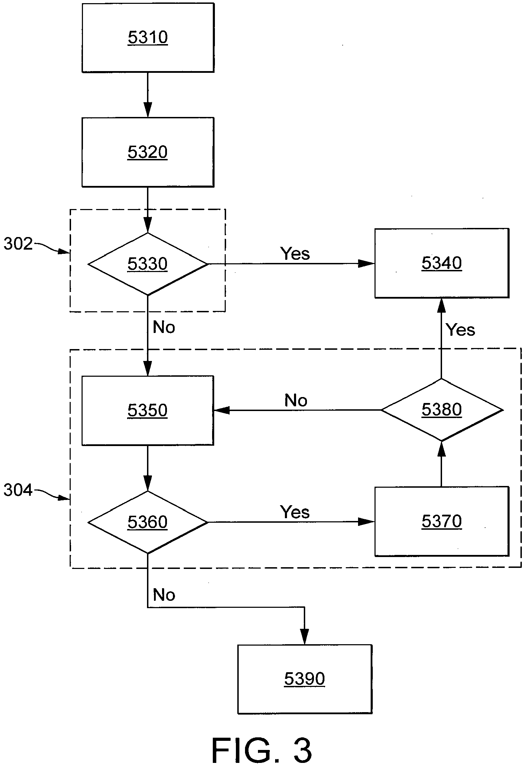

Figure 3 represents a method by which interference, or possible interference, to the terminal's GNSS received signal caused by the harmonics and/or IMD may be mitigated.

In Step S310, the terminal 110 determines that at the current Resource Block (RB) that it is using for UL CA, there are, or may be, or are likely to be, harmonic and/or IMD interference in the GNSS band 240 that the terminal 110 is using. The terminal 110 will be aware of whether or not the terminal's GNSS receiver is active (i.e., that the terminal 110 is attempt to use GNSS) and may make the determination of whether or not interference is present in the GNSS band 240 in any suitable way, which might include consideration of one or more of GNSS received signal strength, UL CA output power, the frequency of UL band A 210, the frequency of UL band B 220, the frequency of the GNSS band 230, the bandwidth of band A BW_{A}, the bandwidth of band B BW_{B}, the bandwidth of the GNSS band BW_{GNSS}, etc.

In Step S320, the terminal 110 signals to the network that there is, or that there may be, harmonic and/or IMD interference in the GNSS band 240. The terminal 110 may signal this to the network entity or scheduler that is in the base station 120 (for example, in a baseband unit) or that is located elsewhere in the network and interfaces with the base station 120. In addition to signalling that there is, or that there may be, interference on the GNSS band 240, the terminal 110 may optionally also request that the RB is rescheduled by the network. Alternatively, it may simply signal that there is, or may be, interference in the GNSS band 240 and wait for a response from the network to mitigate the interference (the network, for example the network entity or scheduler, may be configured to reschedule the RB in response to such signalling from the terminal 110). The signalling from the terminal 110 to the network may include any suitable information that might assist the network in mitigating interference in the GNSS band 240.

Having signalled this to the network (for example, the network entity or scheduler), the terminal 110 waits for a response from the network to reschedule the RB. The network may be able to reschedule the RB, in which case the network may signal to the terminal 110 the rescheduling of the RB. Such a rescheduling should move the harmonics and/or IMD such that they no longer interfere with the GNSS band 240.

Alternatively, the network may be unable to reschedule the RB, or be unable to do so in a timely manner (for example, because it takes the network a long time to identify suitable re-allocation or rescheduling and/or a suitable change of frequencies).

Therefore, in step S330, the terminal 110 may wait for a period of time t₁ for a response from the network rescheduling the RB. If the terminal 110 receives a rescheduling signal within the period of time t₁, the network has performed the act in a timely manner and the method proceeds to Step S340.

In Step S340, because the RB has been rescheduled in order to solve the interference problem, the harmonics and/or IMD should no longer interfere with the GNSS band 240. Therefore interference, or potential interference, in the GNSS band 240 should be mitigated and the problem considered to have been solved.

If the terminal 110 does not receive an RB rescheduling within the period of time t₁, the network is considered not to have acted in a timely manner and the mitigation procedure of RB rescheduling is considered to have failed. In this case, the method proceeds to Step S350.

In this way, the terminal 110 is not left for an unreasonably long period of time waiting for a positive response from the network (which may potentially never arrive, for example, if the network is unable to reschedule the RB) with interference on the GNSS band 240 all the time taking place. Time period t₁ may be any suitable period of time and may be dependent on regulatory requirements and/or performance requirements for GNSS. By way of example only, t₁ may be set to a of time between 5-500ms, such as 7ms, or 13ms, or 35ms, or 80ms, or 200ms, or 450ms, etc, or more particularly to a time between 8-30ms, such as 9ms, or 15ms, or 22ms, or 25ms, etc, or and more particularly to a time between 10-20ms, for example 11 ms, or 14ms, or 18ms, etc. The time period t₁ may be re-configurable, such that it can be adjusted to suit different environments and the different, varying needs of terminals and/or the network.

The mitigation procedure of RB rescheduling is indicated generally with the reference numeral 302.

In step S350, the terminal 110 signals the network (for example, the network entity or scheduler) with a request for a maximum power reduction (MPR). The MPR request may include an amount by which the terminal 110 wishes to reduce the maximum output power P_{MAX} of the terminal 110(see Figure 2). An example MPR is indicated in Figure 2 by reference numeral 250. By reducing the maximum output power P_{MAX} of the terminal 110, the degree of harmonic and/or IMD interference on the GNSS band 240 may be reduced by an amount indicated by reference numeral 260. This reduction may mitigate interference on the GNSS band 240 sufficiently for the interference problem to be overcome.

The terminal 110 may determine the desired amount of MPR by any suitable means, for example it may be a fixed amount that it will always request when MPR is desired (wherein the fixed amount could be set at any time during the life of the terminal 110 and/or altered at any time during the life of the terminal 110) or it may be determined by the terminal 110 by any suitable means, for example in consideration of at least one of GNSS received signal strength, UL CA output power, the frequency of UL band A 210, the frequency of UL band B 220, the frequency of the GNSS band 230, the bandwidth of band A BW_{A}, the bandwidth of band B BW_{B}, the bandwidth of the GNSS band BW_{GNSS}, etc.

The network may or may not have the capability of granting a request for MPR. In the event that the network has the capability of granting a request for MPR, it may nevertheless be unable to grant the requested MPR in a timely manner, or may be unable to grant MPR to the extent requested. Therefore, in step S360, the terminal 110 may wait for a period of time t₂ for an instruction from the network granting the request for MPR.

Upon receiving a request for MPR, the network may first determine if it can deal with such a request. If it cannot, it may simply ignore the request. If it can deal with the request, the network may determine whether or not the requested amount of MPR is less than an allowable limit, or threshold, MPR_{LIMIT}. If the requested amount of MPR is not less than MPR_{LIMIT}, the network cannot signal to the terminal 110 to apply the requested MPR to the UL maximum output power P_{MAX} of the terminal 110. Therefore, the terminal 110 may not receive a response to the request for MPR.

If the requested MPR is less than MPR_{LIMIT}, the control process proceeds to Step S370 and the network signals to the terminal 110 that is should apply the requested amount of MPR to its maximum output power P_{MAX}.

The MPR_{LIMIT} may be set to any value whereby a reduction of a greater amount would be considered to reduce the maximum output power P_{MAX} too much, such that the resulting maximum output power P_{MAX} might be at an unhelpfully low level. In this way, the network may be confident that the maximum output power P_{MAX} will remain sufficiently high for reliable carrier aggregation.

If the terminal 110 does not receive from the network an instruction to carry out MPR within the time period t₂, the MPR mitigation procedure is considered to have failed and the method proceeds to Step S390. The terminal 110 may not receive such an instruction from the network because the network cannot deal with requests for MPR, or because the network failed to deal with the request sufficiently quickly, or because the network determined that the requested MPR was not less than the MPR_{LIMIT.}

Time period t₂ may be any suitable period of time, and may be dependent on regulatory requirements and/or performance requirements for GNSS. By way of example only, t2 may be set to a of time between 5-500ms, such as 7ms, or 13ms, or 35ms, or 80ms, or 200ms, or 450ms, etc, or more particularly to a time between 8-30ms, such as 9ms, or 15ms, or 22ms, or 25ms, etc, or and more particularly to a time between 10-20ms, for example 11 ms, or 14ms, or 18ms, etc]. The time period t₂ may be re-configurable, such that it can be adjusted over time to suit different environments and different, varying needs of the terminal and/or network. The time period t₂ may be the same as t₁, or it may be different to t₁.

In Step S390, the terminal 110 takes control of dealing with the interference problem itself and, therefore, starts to act autonomously with regard to mitigating interference in the GNSS band 240 (described in more detail below).

In this way, the terminal 110 is not left for a long period of time waiting for an MPR response from the network (which may potentially not ever arrive, for example if the network is unable to deal with MPR requests, or if the requested degree of MPR is not less than MPR_{LIMIT}) with interference on the GNSS band 240 all the time taking place.

Having received the signalling from the network in Step S370, the terminal reduces its maximum output power P_{MAX} by an amount equal to the instructed MPR.

In Step S380 the terminal 110 may then consider if the GNSS performance has consequently reached an acceptable level. The terminal may make this determination by any suitable means, for example in consideration of at least one of GNSS received signal strength, UL CA output power, the frequency of UL band A 210, the frequency of UL band B 220, the frequency of the GNSS band 230, the bandwidth of band A BW_{A}, the bandwidth of band B BW_{B}, the bandwidth of the GNSS band BW_{GNSS}, etc.

Reference numeral 260 in Figure 2 shows how IMD 230 (or, additionally or alternatively, harmonics) may be reduced by a reduction in P_{MAX}. If the reduction in IMD 230 (or, additionally or alternatively, harmonics) results in GNSS performance reaching an acceptable level, the method for mitigating interference proceeds to Step S340 where the interference problem is considered to have been sufficiently mitigated and therefore solved. If the reduction in IMD 230 (or, additionally or alternatively, harmonics) does not result in the GNSS performance reaching an acceptable level, the method for mitigating interference proceeds to Step S350, where the terminal 110 signals a request to the network for a further MPR. The steps of the method subsequent to the request for MPR are then the same as described above.

In an alternative implementation, if the GNSS performance after MPR has not reached an acceptable level, the process of MPR may be considered to have failed and the method proceed from Step S380 to S390.

The process of maximum power reduction (MPR) is generally indicated by reference numeral 304 in Figure 3.

In Step S390, the terminal 110 deals with the GNSS interference problem autonomously. The terminal 110 may deal with the interference in the GNSS band 240 by any suitable means. For example, it may decide to de-activate reception of the secondary carrier (for example, UL band B 220), such that UL carrier aggregation no longer uses the secondary carrier, or it may de-activate UL carrier aggregation altogether. Additionally, or alternatively, it may change the primary and/or secondary carriers (UL band A 210 and/or UL band B 220) in order to try to move the IMD and/or harmonics so that they do not interfere with the GNSS band 240. Additionally, or alternatively, the terminal 110 may apply terminal controlled MPR to the output power in order to try to reduce the level of IMD and/or harmonics interference.

The terminal 110 may optionally signal to the network any actions that it has taken and the reasons for those actions. For example, the terminal 110 may signal to the network that CA has been turned off for reasons of GNSS interference.

Therefore, it can be seen that in the method of mitigating interference, network controlled procedures 302 and 304 are initiated first. If those network controlled procedures fail, a terminal controlled procedure is initiated. In this way, control of mitigation of GNSS interference may be balanced between the network and terminal 110 in a more predictable and effective way. The network may attempt centralised control of interference mitigation, which might have the best chance of effectively mitigating the interference whilst still enabling UL CA to take place effectively. If those mitigation procedures should fail (for example, through expiry of time periods t₁ or t₂), the terminal 110 may then be able to address the interference problem using terminal controlled mitigation procedures, thereby preventing interference persisting indefinitely (as might be the case if control of mitigation procedures is retained exclusively by the network). As a result, mitigation of interference may be more predictable for all parties involved and optimised mitigation of interference may be achieved.

Furthermore, by utilising timers t₁ and t₂, it may be ensured that the network makes timely decisions and does not leave the terminal waiting for network controlled interference mitigation for extended periods of time. Furthermore, by utilising MPR_{LIMIT}, the range of power reduction allowable can be controlled by the network such that UL CA can continue to take place effectively after MPR.

Although specific aspects have been described, it will be recognised that a number of variations or modifications may be employed. For example, rather than carrying out mitigation procedure 302 (RB re-allocation or rescheduling and/or a changing of the frequencies of one or both of UL band A 210 and UL band B 220) and then, if that fails, carrying out mitigation procedure 304 (MPR of output power), the procedures may be carried out in the opposite order. In this case, the terminal 110 may initially request MPR such that in the method of mitigating interference, Step S350 follows Step S320. If the MPR procedure 304 fails, Step S360 may proceed to Step S330 by virtue of the terminal 110 requesting RB re-allocation or rescheduling and/or a changing of the frequencies of one or both of UL band A 210 and UL band B 220. If mitigation procedure 302 (RB re-allocation or rescheduling and/or a changing of the frequencies of one or both of UL band A 210 and UL band B 220) fails, the method of mitigating interference may then proceed to Step S390.

In a further alternative, only one of mitigation procedure 302 or mitigation procedure 304 may be initiated. In the event that the initiated mitigation procedure fails (at either Step S330 or Step S360), the control process may go straight to Step S390.

In addition to initiating one or more of mitigation procedures 302 and/or 304, any one or more further network controlled mitigation procedures may be attempted before the terminal 110 takes autonomous control of mitigating GNSS interference.

In a further alternative, rather than initiating mitigation procedures 302 and/or 304, any one or more alternative network controlled mitigation procedures may be initiated in order to try to mitigate GNSS interference. In the event that the one or more mitigation procedures fails, the terminal 110 may initiate autonomous, terminal controlled mitigation.

In the above described control method, the terminal 110 maintains timers t₁ and t₂. However, it will be appreciated that in an alternative implementation, the network may maintain one or both of timers t₁ and t₂. For example, if the network cannot perform RB re-allocation or rescheduling and/or a change of the frequencies of one or both of UL band A 210 and UL band B 220 within the time period t₁, it may signal to the terminal 110 that it cannot perform the reallocation or rescheduling and/or change the frequencies. The terminal may then signal a request for MPR in Step S350 or may initiate terminal controlled mitigation in Step S390. Additionally, or alternatively, if the network cannot grant a requested MPR because it is unable to deal with such a request, or because it cannot deal with it within the time period t₂, or because the requested MPR is not less than MPR_{LIMIT}, it may signal to the terminal 110 that it cannot instruct MPR. The terminal may then signal a request for RB re-allocation or rescheduling and/or a change of the frequencies of one or both of UL band A 210 and UL band B 220, or alternatively initiate terminal controlled mitigation in Step S390.

In Figure 1, there is represented a single terminal 110 and a single base station 120, the terminal 110 being located within the cell 130 of the base station 120. However, it will be appreciated that any number of terminals may be located within the cell 130 of the base station 120, for example two, three, six, ten etc. Any one or more of the terminals may be capable of performing UL CA. Furthermore, in addition to being located within the cell 130 of the base station 120, the terminal 110 may also be located within the cell of one or more other base stations i.e. the cells of one or more other base stations may overlap with cell 130 and the terminal 110 may be located within the intersection of the cells.

In the above, UL CA aggregation using two carriers, UL band A 210 and UL band B 220, has been described. However, it will be appreciated that the method for mitigating interference may equally be applied where the terminal 110 is performing UL CA using three or more carriers.

The terminal 110 may perform UL CA using intra-band contiguous carriers, or intra-band non-contiguous carriers, or inter-band, non-contiguous carriers, or any other configuration of carriers by which UL CA may be performed.

In the above, a single network entity or scheduler is described as controlling the network controlled mitigation procedures 302 and 304. The network entity or scheduler may be a network controller that is implemented as a single entity or node in the network. Alternatively, the network controller may be part of another entity, for example the base station 120. Alternatively, the network controller may comprise two or more different network entities or nodes, wherein the functionality of the network controller is split across the two or more network entities or nodes. The above described network entity or scheduler may be any form of network controller.

In the method for mitigating interference, there is an RB rescheduling procedure 302. RB rescheduling may also be known as RB reallocation. In addition, or as an alternative, to RB rescheduling, in the procedure 302, the network may change one or both of the UL band A 210 and UL band B 220 frequencies. This might also be known as band reallocation for at least one of UL band A 210 and UL band B 220.

In the above, the network considers how the requested amount of MPR compares with MPR_{LIMIT} and then only signal that MPR is approved if the requested amount of MPR is less than MPR_{LIMIT}. However, the network may instead signal that MPR is approved if the requested amount of MPR is equal to or less than MPR_{LIMIT}.

If RB re-allocation or rescheduling and/or a change of the frequencies of one or both of UL band A 210 and UL band B 220 takes place, the terminal 110 may optionally reconsider if there is, or may be, or is likely to be, GNSS interference (for example, it may carry out Step S310 again). If it is determined that GNSS interference is, or may be, or is likely to be, taking place, the method of mitigating interference may be carried out again (which might include attempting mitigation procedure 302 and, if that fails, mitigation procedure 304 and, if that fails, initiating terminal controlled mitigation, or just attempting mitigation procedure 304 and, if that fails, initiating terminal controlled mitigation).

Alternatively, if after RB re-allocation or rescheduling and/or a change of the frequencies of one or both of UL band A 210 and UL band B 220 has taken place and it is determined that GNSS interference is, or may be, or is likely to be, taking place, it may be considered that mitigation procedure 302 has failed and that the terminal 110 should request mitigation procedure 304 (Step S350) or proceed to terminal controlled mitigation (Step S390) since a network controlled mitigation procedure has already failed to solve the interference problem.

In the above, the terminal's request for MPR in Step S350 includes a requested amount of MPR. However, the terminal may alternatively simply request MPR without any particular amount of power reduction requested. The network may then determine the amount of power reduction to instruct the terminal 110 to apply to the output power P_{MAX} and include this in signalling to the terminal 110. The network may make this determination in any suitable way, for example it may always instruct a particular amount of reduction (for example, an amount equal to MPR_{LIMIT}), or may determine it on the basis of any suitable information that it may have (either received from the terminal 110, or by other means), for example at least one of GNSS received signal strength, UL CA output power, the frequency of UL band A 210, the frequency of UL band B 220, the frequency of the GNSS band 230, the bandwidth of band A BW_{A}, the bandwidth of band B BW_{B}, the bandwidth of the GNSS band BW_{GNSS}, etc.

In the above, mitigation of interference in the GNSS band 240 caused by UL CA is described. However, the method of mitigating interference may be applied to mitigation of interference caused by UL CA to any other systems on the terminal 110 operating in other portions of the spectrum, for example Long-Term Evolution (LTE) receiver (Rx) bands etc.

The above method for mitigating interference has been described with particular reference to UL CA. However, it will be appreciated that the technique may equally be applied to mitigation of interference caused by downlink (DL) CA. For example, harmonics created by DL CA could interfere with the GNSS reception at the terminal, or with any other portions of the spectrum, and the above method may be used to mitigate the interference. Furthermore, the method for mitigating interference may also be applied to mitigation of interference caused by harmonics generated by single carrier uplink or downlink transmissions. In this instance, network controlled RB rescheduling (Step 302), network controlled MPR (Step 304) and terminal controlled MPR (Step 390) could mitigate interference caused by harmonics at the terminal 110.

## Claims

1. A method for mitigating interference caused by uplink carrier aggregation at a terminal, the method comprising the steps of:
initiating a first mitigation procedure, wherein the first mitigation procedure is controlled by a network controller; and
if there is a failure in the first mitigation procedure, initiating a second mitigation procedure, wherein the second mitigation procedure is controlled by the terminal.

2. The method of claim 1, wherein the first mitigation procedure comprises at least one of:
procedure (a): rescheduling a resource block allocation for the terminal;
procedure (b): changing at least one of the carrier bands used for carrier aggregation; and
procedure (c): reducing a maximum output power of the terminal.

3. The method of claim 2, wherein there is a failure in the first mitigation procedure if either procedure (a) or procedure (b) fails.

4. The method of claim 2, wherein the first mitigation procedure fails if both procedure (a) and procedure (b) fail.

5. The method of claim 4, wherein initiating the first mitigation procedure comprises
initiating procedure (a) and, if procedure (a) fails, initiating procedure (b); or
initiating procedure (b) and, if procedure (b) fails, initiating procedure (a).

6. The method of any of claims 2 to 5, wherein procedure (a) fails if the network controller has not rescheduled the resource block allocation for the terminal within a first time period.

7. The method of any of claims 2 to 6, wherein procedure (b) fails if the network controller has not instructed the terminal to apply a maximum output power reduction within a second time period.

8. The method of any of claims 2 to 7, wherein procedure (b) fails if a requested reduction of maximum output power of the terminal exceeds a threshold power reduction amount.

9. The method of any preceding claim, wherein the first mitigation procedure comprises the terminal indicating to the network that interference caused by carrier aggregation is, or may be, taking place at a terminal.

10. The method of any preceding claim, wherein the second mitigation procedure comprises at least one of:
procedure (d): reducing a maximum output power of the terminal; and
procedure (e): de-activating transmission on at least one of the carrier bands used for carrier aggregation.

11. The method of any preceding claim, wherein the terminal comprises a Global Navigation Satellite System receiver, and the interference caused by uplink carrier aggregation at the terminal comprises interference to the received Global Navigation Satellite System signal.

12. A terminal for mitigating interference caused by uplink carrier aggregation at the terminal, the terminal being configured to:
initiate a first mitigation procedure, wherein the first mitigation procedure is controlled by a network controller; and
if there is a failure in the first mitigation procedure, initiate a second mitigation procedure, wherein the second mitigation procedure is controlled by the terminal.

13. A network controller mitigating interference caused by uplink carrier aggregation at a terminal, the network controller being configured to:
initiate a first mitigation procedure, wherein the first mitigation procedure is controlled by the network controller; and
if there is a failure in the first mitigation procedure, initiate a second mitigation procedure, wherein the second mitigation procedure is controlled by the terminal.

14. A system comprising the terminal of claim 12 and the network controller of claim 13.
